(19) Europäisches Patentamt
European Patent Office
Office européen des brevets

(11) **EP 3 617 332 A1**

(12) **EUROPÄISCHE PATENTANMELDUNG**

(43) Veröffentlichungstag:
04.03.2020 Patentblatt 2020/10

(51) Int Cl.:
*C21C 7/068* (2006.01)

(21) Anmeldenummer: **19192003.2**

(22) Anmeldetag: **16.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.08.2018 DE 102018121232**

(71) Anmelder: SMS Group GmbH
**40237 Düsseldorf (DE)**

(72) Erfinder:
• **Reichel, Johann**
**40489 Düsseldorf (DE)**
• **Germershausen, Thomas**
**40882 Ratingen (DE)**

(74) Vertreter: **Klüppel, Walter**
**Hemmerich & Kollegen**
**Patentanwälte**
**Hammerstraße 2**
**57072 Siegen (DE)**

(54) **VERFAHREN ZUR ANALYTISCHEN BESTIMMUNG EINES KRITISCHEN PROZESSMOMENTS BEI DER ENTKOHLUNG VON STAHL- UND LEGIERUNGSSCHMELZEN**

(57) 1. Verfahren zur analytischen Bestimmung des kritischen Prozessmoments bei der Entkohlung von Stahl- und Legierungsschmelzen.

2.1. Es wird ein Verfahren angegeben, mit dem die Bestimmung des kritischen Punktes, basierend auf thermodynamischen Zusammenhängen des Prozesses als solches, als auch unter Berücksichtigung der technischen Parameter des Konverters, genau bestimmt werden kann.

2.2 Hierzu werden folgende Regelgrößen berechnet:

a) der kritische Moment als Zeitangabe des Auftretens gesehen vom Prozessbeginn, und der kritische Kohlenstoffgehalt als Element der Schmelzzusammensetzung;

b) die Hauptentkohlungsstoffgeschwindigkeit und die Dauer der Hauptentkohlung als Funktion der Sauerstoffblasrate in der Hauptper-iode;

c) die Dauer der nachfolgenden unmittelbar an die Hauptentkohlungsperiode anschließende Blasperiode;

d) das thermodynamische Kohlenstoffgleichgewicht am Blasprozessende;

e) die Entkohlungsgeschwindigkeit am Blasende.

Fig.1

**Beschreibung**

Die Erfindung betrifft ein Verfahren zur analytischen Bestimmung eines charakteristischen Moments (kritischer Kohlenstoffgehalt) eines metallurgischen Entkohlungsprozesses für Stahlschmelzen zur Herstellung von Kohlenstoffstahl, Rostfreistahl und Ferrolegierungen inklusive Ferromangan, Ferrochrom und Ferronickel.

Beim Frischen von Stahl und Legierungen nehmen die Kohlenstoff-Oxidationsprozesse eine vorrangige Stellung ein. Sie sind Gegenstand ständiger Optimierung. Gesucht ist nämlich ein Frischverfahren, das die Erreichung einer geringen Kohlenstoffkonzentration bei gleichzeitiger Minimierung der Behandlungszeiten ermöglicht. Das Ergebnis eines solchen Verfahrens ist eine Verringerung des Verbrauchs von Sauerstoff, Inertgas und der Reduktionsmittel sowie auch von Schlackenbildnern.

Auf diesem Wege werden die thermischen Betriebsbedingungen des Konverters und der Pfanne verbessert und damit auch die Lebensdauer der feuerfesten Auskleidung verlängert. Dieses Ziel ist umso schwieriger zu erreichen, je höher Konzentrationen von Haupt-Metallkomponenten wie z.B. Eisen, Chrom oder Mangan sind und je niedriger die anfängliche Metallbad-temperatur vor der Behandlung zur Verfügung steht.

Trotz zahlreicher Arbeiten über die Entkohlung von flüssigen Eisen-Chrom-Mangan- Legierungen, gibt es bis heute keine allgemeine Interpretation des Gesamtprozessablaufs. Es geht nämlich darum, dass in Abhängigkeit vom Prozesszustand eine kontrollierte Zufuhr von Sauerstoff entweder durch Variierung dessen Verhältnisses zum Inertgas wie z.B. beim AOD- BOF -Prozess oder durch Druckabsenkung und Zugabe einer bestimmten Spülgasmenge - wie im VD-VOD-Prozess der Fall - möglich ist.

Die Beobachtungen industrieller Frischprozesse zeigen während des gesamten Kohlenstoffoxidationsablaufs zwei typische, sich hinsichtlich der Reaktionsgeschwindigkeit unterscheidende Prozessperioden.

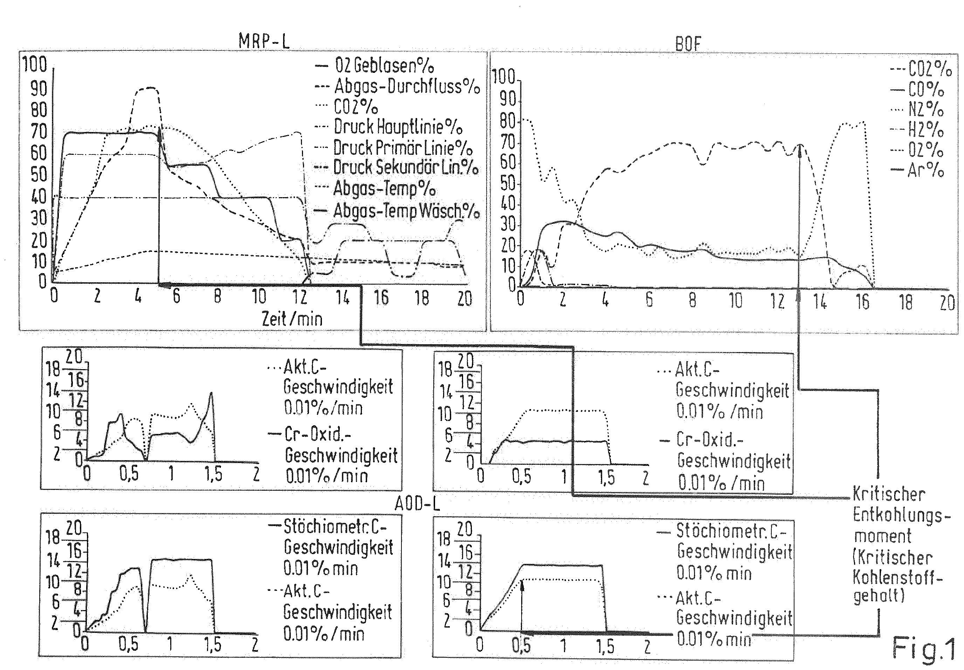

Die Fig. 1. stellt den typischen Verlauf einer Entkohlung in einem Konverter dar. Kennzeichnend ist, dass die Entkohlungsgeschwindigkeit innerhalb der Hauptperiode nahezu konstant ist und zu fast linearer Verringerung der Kohlenstoffkonzentration führt. Nach Erreichung eines bestimmten Wertes ändern sich die Entkohlungsgeschwindigkeit in einen quasi-exponentiellen Verlauf und dementsprechend auch der Kohlestoffgehalt. Dieses Ablaufverhalten ist bei jedem Entkohlungsprozess zu beobachten.

Dieser Moment der Entkohlung bedeutet eine Änderung der Prozesskinetik, indem eine Entkohlungsphase, bestimmt durch die Sauerstoff-Geschwindigkeitszufuhr (Blasrate), in eine Periode übergeht, in der die Entkohlung mit einem Reaktionspotential gesteuert wird. Dieses Potential hängt in jedem Moment des Prozesses von der Gestaltung des thermodynamischen Kohlenstoffgleichgewichts ab.

Unabhängig von konventionellen Rostfreistahlprozessen, für die die Bestimmung des kritischen Punktes in der Patentschrift DE 195 40 490 C1 ausführlich beschrieben worden ist, weisen weitere Untersuchungen aus, dass diese Vorgänge auch für tiefentkohlten rostfrei und spezial Stähle wie auch für konventionelle Kohlenstoffstähle als auch Ferrolegierungen gelten.

Für alle diese Prozesse gilt eine klare Prozessführung, unterteilt in die Perioden bevor und nach dem kritischen Punkt (Moment des kritischen Kohlenstoffgehalts). Sowohl mit vor dem Behandlungsbeginn bekannten Startparametern, wie chemische Analyse, Gewicht, Temperatur und die Blasverhältnisse, als auch durch Parametern am Prozessende, ermöglicht die Unterteilung eine Prozessprognose im zeitlichen Verlauf.

Die Prognose legt die Zeitpunkte für Materialzugaben wie Legierungen, Schlackenbildnern und die entsprechenden Blaspattern von Sauerstoff und Inertgasen vor. Zusätzlich ermöglicht die Unterteilung, die Prozessdauer zu bestimmen.

Aufgabe der vorliegenden Erfindung ist es, ein Verfahren anzugeben mit dem die Bestimmung des kritischen Punktes, basierend auf thermodynamischen Zusammenhängen des Prozesses als solches, als auch unter Berücksichtigung der technischen Parameter des Konverters, genau bestimmbar ist.

Diese Aufgabe wird durch die in Anspruch 1 angegebenen Merkmale gelöst, insbesondere dadurch, dass folgende Regelgrößen berechnet werden:

> a) der kritische Moment als Zeitangabe des Auftretens gesehen vom Prozessbeginn, und der kritische Kohlenstoffgehalt als Element der Schmelzzusammensetzung;
> b) die Hauptentkohlungsstoffgeschwindigkeit und die Dauer der Hauptentkohlung als Funktion der Sauerstoffblasrate in der Hauptperiode;
> c) die Dauer der nachfolgenden unmittelbar an die Hauptentkohlungsperiode anschließende Blasperiode;
> d) das thermodynamische Kohlenstoffgleichgewicht am Blasprozessende;
> e) die Entkohlungsgeschwindigkeit am Blasende.

Die Reaktionen und thermodynamischen Verhältnisse im Frischprozess von Stählen und Legierungen werden wie folgt zusammengefasst:
Zu den Grundreaktionen bei Frischprozessen zählen:

Die Kohlestoffoxydation

$$[C] + [O] = [CO\ ]\qquad\qquad (1)$$

mit der Gleichgewichtskonstante

$$\log K_c(T) = \frac{1168}{T} + 2{,}07 \qquad\qquad (1a)$$

Die Chromoxydation

$$2[Cr] + 3[O] = [Cr_2O_3]\qquad\qquad (2)$$

mit der Gleichgewichtskonstante

$$\log K_{Cr}(T) = \frac{44040}{T} - 19{,}42 \qquad\qquad (2a)$$

Die Manganoxydation

$$[Mn] + [O] = [MnO]\qquad\qquad (3)$$

mit der Gleichgewichtskonstante

$$\log K_{Mn}(T) = \frac{12760}{T} - 5{,}57 \qquad\qquad (3a)$$

Die Eisenoxydation

$$[Fe] + [O] = [FeO]\qquad\qquad (4)$$

mit der Gleichgewichtskonstante

$$\log K_{Fe}(T) = \frac{5354}{T} - 2{,}134 \qquad\qquad (4a)$$

wobei die Temperatur T in Kelvin Grad dem flüssigen Zustand der Schmelze entspricht.

Abhängig von der Art der Schmelze, wie Stahl mit dem Lösungselement Eisen, Ferrochrom mit dem Lösungselement Chrom bzw. Ferromangan mit dem Lösungselement Mangan, die Entkohlungsreaktion verläuft prinzipiell naturgemäß nach dem gleichen Schema, d.h.

$$\text{Metall (Fe, Cr oder Mn) + Sauerstoff = Metalloxyd}\qquad\qquad (5)$$

$$\text{s. Gl. (2),(3) und (4)}$$

$$\text{Metalloxyd} + \text{Kohlenstoff} = \text{Metall} + \text{Kohlenmonoxyd} \tag{6}$$

Im Einzelnen gilt:

$$(Cr_2O_3) + 3[C] = 2[Cr] + 3\{CO\} \tag{7}$$

$$(MnO) + [C] = [Mn] + \{CO\} \tag{8}$$

$$(FeO) + [C] = [Fe] + \{CO\} \tag{9}$$

Die thermodynamischen Gleichgewichte der Reaktionen (7), (8) und (9) sind mit folgenden Zusammenhängen beschrieben:

Chrom

$$K_{Cr,C}(T) = \frac{a_{Cr}^2 \, p_{CO}^3}{a_{Cr_2O_3} \, a_C^3} \; ; \; a_{Cr} = f_{Cr}Cr \quad ; \; \log f_{Cr} = \sum e_{cr}^i X_i \; ; \log f_C = \sum e_c^i X_i \tag{10}$$

wobei
ai :    Aktivitäten der Elemente bzw. Oxyde
fCr, fC :    Aktivitätskoeffizient des Elements Cr bzw. C

$e_{Cr}^i$ , $e_C^i$ :    Wechselwirkungskoeffizienten von Cr bzw. C, Wechselwirkung mit anderen Elementen Xi gelösten im Flüssig-Metall
pCO :    Kohlenmonoxid- Partialdruck
Das Kohlenstoffgleichgewicht errechnet sich aus der Gl(10) wie folgt:

$$C^* = \frac{a_{Cr}^{2/3}}{a_{Cr_2O_3}^{1/3}} \frac{1}{K_{Cr,C}^{1/3}(T)} \frac{1}{f_C} p_{CO} = K(X,Cr,T) p_{CO} \tag{11}$$

und die Entkohlungsgeschwindigkeit dementsprechend

$$\left(-\frac{dC}{dt}\right) = \frac{1}{\tau_{Cr}}\left(C - C^*\right) \tag{12}$$

mit einer Reaktionszeitkonstante $\tau_{Cr}$

Mangan

$$K_{Mn,C}(T) = \frac{a_{Mn} \, p_{CO}}{a_{MnO} \, a_C} \; ; \; a_{Mn} = f_{Mn}Mn \quad ; \; \log f_{Mn} = \sum e_{Mn}^i X_i \; ; \log f_C = \sum e_c^i X_i \tag{13}$$

wobei

ai : Aktivitäten der Elemente bzw. Oxyde

fMn, fC : Aktivitätskoeffizient des Elements Cr bzw. C

$e_{Mn}^i$ , $e_C^i$ : Wechselwirkungskoeffizienten von Mn bzw. C, Wechselwirkung mit anderen Elementen Xi, gelöst im Flüssig-Metall

pCO : Kohlenmonoxid- Partialdruck

Das Kohlenstoffgleichgewicht errechnet sich aus der Gl(13) wie folgt:

$$C^* = \frac{a_{Mn}}{a_{MnO}} \frac{1}{K_{Mn,C}(T)} \frac{1}{f_C} p_{CO} = K(X, Mn, T) p_{CO} \qquad (14)$$

und die Entkohlungsgeschwindigkeit dementsprechend

$$\left(-\frac{dC}{dt}\right) = \frac{1}{\tau_{Mn}}\left(C - C^*\right) \qquad (15)$$

mit einer Reaktionszeitkonstante $\tau_{Mn}$

Eisen

$$K_{Fe,C}(T) = \frac{a_{Fe} p_{CO}}{a_{FeO} a_C} ; \ a_{Fe} = f_{Fe} Fe \ ; \ \log f_{Fe} = \sum e_{Fe}^i X_i ; \log f_C = \sum e_c^i X_i \qquad (16)$$

wobei

ai : Aktivitäten der Elemente bzw. Oxyde

fFe, fC : Aktivitätskoeffizient des Elements Cr bzw. C

$e_{Fe}^i$ , $e_C^i$ : Wechselwirkungskoeffizienten von Fe bzw. C, Wechselwirkung mit anderen Elementen Xi, gelöst im Flüssig-Metall

pCO : Kohlenmonoxid- Partialdruck

Das Kohlenstoffgleichgewicht errechnet sich aus der Gl(13) wie folgt:

$$C^* = \frac{a_{Fe}}{a_{FeO}} \frac{1}{K_{Fe,C}(T)} \frac{1}{f_C} p_{CO} = K(X, Fe, T) p_{CO} \qquad (17)$$

und die Entkohlungsgeschwindigkeit dementsprechend

$$\left(-\frac{dC}{dt}\right) = \frac{1}{\tau_{Fe}}\left(C - C^*\right) \qquad (18)$$

mit einer Reaktionszeitkonstante $\tau_{Fe}$

**Kohlenmonoxid-Partialdruck pCO**

Wie den Gl. (11), (14) und (17) zu entnehmen ist, wirkt der CO-Partialdruck direkt proportional auf das C-Gleichgewicht, wobei der Druck folgend dargestellt werden kann

$$p_{CO} = \frac{Q_{CO}}{Q_{CO} + Q_{IG}} p \qquad\qquad (19)$$

worin QCO - und QIG beschreiben Molenflüsse der Gase, des Kohlenmonoxids und des Inertgases in der Schmelze.

Das Kohlenmonoxid als Produkt der Kohlenstoffoxidation entsteht durch die Reduktion der entsprechende Oxide Gl. (7), (8) und (9). Die Reaktionen sind in ihrer Art heterogen und laufen am Phasengrenzbereich Flüssigmetall-Gas ab. Dementsprechend gilt

$$Q_{CO} = \frac{22,4}{11,2} Q_{O_2} \qquad\qquad (20)$$

und damit

$$p_{CO} = \frac{\frac{22,4}{11,2} Q_{O_2}}{\frac{22,4}{11,2} Q_{O_2} + Q_{IG}} p \quad = \quad \frac{\frac{O_{O_2}}{Q_{IG}}}{\frac{Q_{O_2}}{Q_{IG}} + 0,5} p \qquad\qquad (21)$$

Das Verhältnis $R = \dfrac{O_{O_2}}{Q_{IG}}$ entspricht einem typischen Behandlungsparameter bekannt bei allen Konverter Prozessen, in denen man den Partialdruck durch das Verhältnis der Sauerstoff - und der Inertgaszufuhr regelt. So definierter CO-Partialdruck kann durch die vereinfachte Form folgend beschrieben werden:

$$p_{CO} = \frac{R}{R + 0,5} p \qquad\qquad (22)$$

**Kinetik der Entkohlungsgeschwindigkeit**

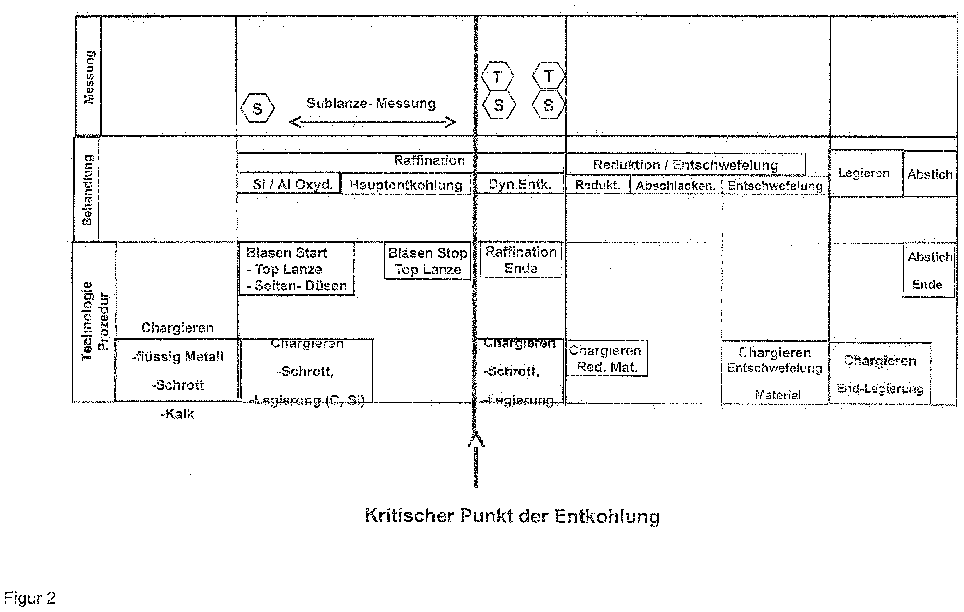

Die Kinetik eines Entkohlungsprozesses von Metallschmelzen zeigt, dass sie von zwei charakteristischen Perioden definiert ist, wie dies in der Fig. 2 dargestellt ist. Die erste beginnt direkt nach den Elementen mit höherer Affinität zu Sauerstoff wie Al bzw. Si abbrennen. Sie gestaltet sich annähernd konstant bis zu dem genannten kritischen Punkt und ist proportional zu Sauerstoffblasrate.

$$\left(-\frac{dC}{dt}\right)_H \quad = \quad \frac{12}{11,2} Q_{O_2C} \frac{1}{W} 100 \qquad\qquad (23)$$

worin

$Q_{O2C} = \eta Q_{O_2}$ O2-Blasrate der Entkohlung

$\eta$ - Effizienz des geblasenen Gesamt-Sauerstoffs

Dieser Verlauf der Kinetik wird erklärt durch verminderte O2-Zufuhr, bedingt durch technische Auslegung des Blassystems. In Wirklichkeit, benötigt das Entkohlungspotential, ausgedrückt durch die Differenz zwischen dem aktuellen Wert des Kohlenstoffs und seinem aktuellen Gleichgewicht, viel höhere O2-Mengen, um den Prozess vollständig zu versorgen.

Wie der Gl (23) zu entnehmen ist, ist der kritische Punkt der letzte Moment in dem die Entkohlungsgeschwindigkeit noch den maximalen Wert erhält.

Die Gleichungen (12), (15) und (18) stellen Entkohlungsgeschwindigkeiten vom Rostfreistahl bzw. FeCr-Schmelzen, FeMn und typischen Stahlschmelzen / Eisenschmelzen nach dem kritischen Punkt dar.

Für die weitere formelle Beschreibung des kritischen Punktes werden gemeinsam für alle drei metallurgischen Gruppen Cr-Mn-Fe allgemeine Formel verwendet und zwar

$$\left(-\frac{dC}{dt}\right) = \frac{1}{\tau_M}\left(C - C^*\right) \tag{24}$$

und

$$C^* = K(X,M,T)p_{CO} \tag{25}$$

worin

M entspricht der Lösungskomponente Cr, Mn bzw. Fe
X - weitere Komponenten im flüssigen Metall

In Zusammenfassung der Gl. (22), (23) und (24) gilt

$$\left(-\frac{dC}{dt}\right) = \frac{1}{\tau_M}\left(C - K(X,M,T)\frac{R}{R+0,5}p\right) \tag{26}$$

Aufgrund der Stätigkeit der Naturprozesse gilt am kritischen Punkt, dass die Kinetik dort mit beiden Gleichungen (23) und (26) beschrieben werden kann. Daraus ergibt sich die Möglichkeit, den kritischen Punkt analytisch zu bestimmen.
Durch den Vergleich beider Entkohlungsgeschwindigkeiten, d.h. beider Gleichungen

$$\frac{12}{11,2}Q_{O_2C}\frac{1}{W}100 = \frac{1}{\tau_M}\left(C_{kr} - K(X,M,T)\frac{R}{R+0,5}p\right) \tag{27}$$

wird der kritische Kohlenstoffgehalt der Schmelze zu

$$C_{kr} = K(X,M,T)\frac{R}{R+0,5}p + \tau_M\frac{12}{11,2}Q_{O_2C}\frac{1}{W}100 \tag{28}$$

wobei

$C_{kr}$ : %
$K(X,M,T)$ : %/bar
$R$ : -
$\tau_M$ : min
$Q_{O_2}$ : Nm3/min
$W$ : kg
$\eta$ : -

**Sauerstoff - Blasprozessdauer**

Blasdauer der Hauptperiode

$$\Delta t_H = \frac{C_i - C_{kr}}{\left(-\dfrac{dC}{dt}\right)_H} \qquad (29)$$

Blasdauer der Post-Hauptperiode

$$\Delta t_{PH} = \tau_M \, \ln\left(\frac{C_{kr} - C_f^*}{C_f - C_f^*}\right) \qquad (30)$$

$C_f^*$ :  C-Gleichgewicht am Prozessende berechnet mit Gl.(25)

Blasprozessdauer

$$\Delta t_{gesamt} = \Delta t_H + \Delta t_{PH} \qquad (31)$$

Beispiel

**Start Parameter:**

Metall Gewicht W: 75 000 kg
Ci % :1.5; Cri%: 16; Nii% :8
Cf % :0.03; Crf%:18; Nif%:8
Ti °C : 1580; Tf °C :1700
$\tau_M$ : 6,5 min
$\eta$ : 0,7
p : 1bar
QO2 : 120 Nm3/min

QIG :6 Nm3/min  $e_C^C = 0,181;$   $e_C^{Cr} = -0,021;$   $e_C^{Ni} = 0,008$   $e_{Cr}^C = -0,107;$   $e_{Cr}^{Cr} = 0,0;$   $e_{Cr}^{Ni} = 0,009$

$a_{Cr_2O_3'}$ = 1,0 (reactive Schlacke)

Berechnete Parameter

log fc : -0,0005; fc : 0,999
log fcf : -0,30867; fcf : 0,4914
log fCr : -0,0885; fCr : 0,8156
aCr : 13,05
logKC,Cr(T): 4,345 ; KC,Cr(T): 22226,17
K(X;M;T) : 0,000749 %/bar
QO2,C : 84 Nm3/min

R : 14

**Ckr : 0,78%**

$\left(-\dfrac{dC}{dt}\right)_H$ : 0,12 %/min

$\Delta t_H$ : 6 min $C_f^*$ : 0,0147 % $\Delta t_{PH}$ : 25,4 min

$\Delta t_{gesamt}$ : 31,4 min

**Patentansprüche**

1. Verfahren zur analytische Bestimmung eines charakteristischen Moments (kritischer Kohlenstoffgehalt) eines metallurgischen Entkohlungsprozesses für Stahlschmelzen zur Herstellung von Kohlenstoffstahl, Rostfreistahl und Ferrolegierungen, inklusive Ferromangan, Ferrochrom und Ferronickel, **gekennzeichnet dadurch, dass** folgende Regelgrößen berechnet werden:

   a) der kritische Moment als Zeitangabe des Auftretens, gesehen vom Prozess beginn, und der kritischer Kohlenstoffgehalt als Element der Schmelzzusammensetzung;
   b) die Hauptentkohlungsstoffgeschwindigkeit und die Dauer der Hauptentkohlung als Funktion der Sauerstoffblasrate in der Hauptper-iode;
   c) die Dauer der nachfolgenden unmittelbar an die Hauptentkohlungsperiode anschließende Blasperiode;
   d) das thermodynamische Kohlenstoffgleichgewicht am Blasprozessende;
   e) die Entkohlungsgeschwindigkeit am Blasende.

2. Verfahren nach Anspruch 1, **dadurch gekennzeichnet, dass** für die Kohlenstoffoxydation gilt:

$$[C]+[O]=[CO]$$

mit der Gleichgewichtskonstante

$$\log K_c(T)=\frac{1168}{T}+2,07$$

3. Verfahren nach Anspruch 1, **dadurch gekennzeichnet, dass** für die Chromoxydation gilt:

$$2[Cr]+3[O]=[Cr_2O_3]$$

mit der Gleichgewichtskonstante

$$\log K_{Cr}(T)=\frac{44040}{T}-19,42$$

4. Verfahren nach Anspruch 1, **dadurch gekennzeichnet, dass** für die Manganoxydation gilt:

$$[Mn]+[O]=[MnO]$$

mit der Gleichgewichtskonstante

$$\log K_{Mn}(T) = \frac{12760}{T} - 5,57$$

**5.** Verfahren nach Anspruch 1, **dadurch gekennzeichnet, dass** für die Eisenoxydation gilt:

$$[Fe] + [O] = [FeO]$$

mit der Gleichgewichtskonstante

$$\log K_{Fe}(T) = \frac{5354}{T} - 2,134$$

wobei die Temperatur T in Kelvin Grad dem flüssigen Zustand der Schmelze entspricht.

**6.** Verfahren nach einem der Ansprüche 1 bis 5, **dadurch gekennzeichnet, dass** in Abhängig von der Art der Schmelze, wie Stahl mit dem Lösungselement Eisen, Ferrochrom mit dem Lösungselement Chrom bzw. Ferromangan mit dem Lösungselement Mangan, die Entkohlungsreaktion nach dem Schema

Metall (Fe, Cr oder Mn) + Sauerstoff = Metalloxyd

Metalloxyd + Kohlenstoff = Metall + Kohlenmonoxyd bestimmt werden,

wobei im Einzelnen gilt:

$$(Cr_2O_3) + 3[C] \quad = \quad 2[Cr] + 3\{CO\}$$

$$(MnO) + [C] \quad = \quad [Mn] + \{CO\}$$

$$(FeO) + [C] \quad = \quad [Fe] + \{CO\}$$

**7.** Verfahren nach Anspruch 1, **dadurch gekennzeichnet, dass** für Chrom gilt:

$$K_{Cr,C}(T) = \frac{a_{Cr}^2 p_{CO}^3}{a_{Cr_2O_3} a_C^3} \; ; \; a_{Cr} = f_{Cr} Cr \quad ; \log f_{Cr} = \sum e_{cr}^i X_i \; ; \log f_C = \sum e_c^i X_i ,$$

wobei

ai: Aktivitäten der Elemente bzw. Oxyde
fCr, fC: Aktivitätskoeffizient des Elements Cr bzw. C

$e_{Cr}^i$ , $e_C^i$  : Wechselwirkungskoeffizienten von Cr bzw. C, Wechselwirkung mit anderen Elementen Xi, gelöst im Flüssig-Metall
pCO : Kohlenmonoxid- Partialdruck ist.

**8.** Verfahren nach Anspruch 7, **dadurch gekennzeichnet, dass** das Kohlenstoffgleichgewicht wie folgt errechnet wird:

$$C^* = \frac{a_{Cr}^{2/3}}{a_{Cr_2O_3}^{1/3}} \frac{1}{K_{Cr,C}^{1/3}(T)} \frac{1}{f_C} p_{CO} \quad = \quad K(X,Cr,T)p_{CO}$$

und die Entkohlungsgeschwindigkeit dementsprechend

$$\left(-\frac{dC}{dt}\right) = \frac{1}{\tau_{Cr}}\left(C - C^*\right)$$

mit einer Reaktionszeitkonstante $\tau_{Cr}$ bestimmt wird.

9. Verfahren nach Anspruch 1, **dadurch gekennzeichnet, dass** für Mangan gilt:

$$K_{Mn,C}(T) = \frac{a_{Mn} p_{CO}}{a_{MnO} a_C}; \quad a_{Mn} = f_{Mn} Mn \quad ; \quad \log f_{Mn} = \sum e_{Mn}^i X_i; \log f_C = \sum e_c^i X_i$$

wobei

    ai: Aktivitäten der Elemente bzw. Oxyde
    fMn, fC: Aktivitätskoeffizient des Elements Cr bzw. C

    $e_{Mn}^i$ , $e_C^i$    : Wechselwirkungskoeffizienten von Mn bzw. C, Wechselwirkung mit anderen Elementen Xi,
    gelöst im Flüssig-Metall
    pCO: Kohlenmonoxid- Partialdruck darstellt.

10. Verfahren nach Anspruch 9, **dadurch gekennzeichnet, dass** das Kohlenstoffgleichgewicht wie folgt errechnet wird:

$$C^* = \frac{a_{Mn}}{a_{MnO}} \frac{1}{K_{Mn,C}(T)} \frac{1}{f_C} p_{CO} \quad = \quad K(X,Mn,T)p_{CO}$$

und die Entkohlungsgeschwindigkeit dementsprechend

$$\left(-\frac{dC}{dt}\right) = \frac{1}{\tau_{Mn}}\left(C - C^*\right)$$

mit einer Reaktionszeitkonstante $\tau_{Mn}$

11. Verfahren nach Anspruch 1, **dadurch gekennzeichnet, dass** für Eisen gilt:

$$K_{Fe,C}(T) = \frac{a_{Fe} p_{CO}}{a_{FeO} a_C}; \quad a_{Fe} = f_{Fe} Fe \quad ; \quad \log f_{Fe} = \sum e_{Fe}^i X_i; \log f_C = \sum e_c^i X_i$$

wobei

    ai: Aktivitäten der Elemente bzw. Oxyde
    fFe, fC: Aktivitätskoeffizient des Elements Cr bzw. C

    $e_{Fe}^i$ , $e_C^i$    : Wechselwirkungskoeffizienten von Fe bzw. C, Wechselwirkung mit anderen Elementen Xi, gelöst im Flüssig-Metall

pCO: Kohlenmonoxid- Partialdruck darstellt.

12. Verfahren nach Anspruch 11, **dadurch gekennzeichnet, dass das** Kohlenstoffgleichgewicht wie folgt errechnet wird:

$$C^* = \frac{a_{Fe}}{a_{FeO}} \frac{1}{K_{Fe,C}(T)} \frac{1}{f_C} p_{CO} \;\; = \;\; K(X,Fe,T) p_{CO}$$

und die Entkohlungsgeschwindigkeit dementsprechend

$$\left(-\frac{dC}{dt}\right) = \frac{1}{\tau_{Fe}}\left(C - C^*\right)$$

mit einer Reaktionszeitkonstante $\tau_{Fe}$

13. Verfahren nach einem oder mehreren der Ansprüche 1 bis 12, **dadurch gekennzeichnet, dass** der Kohlenmonoxid-Partialdruck pCO Partialdruck sich direkt proportional auf das C-Gleichgewicht auswirkt, wobei der Druck wie folgt dargestellt wird:

$$p_{CO} = \frac{Q_{CO}}{Q_{CO} + Q_{IG}} p$$

wobei QCO - und QIG Molenflüsse der Gase, des Kohlenmonoxids und des Inertgases in der Schmelze beschreiben, wobei gilt:

$$Q_{CO} = \frac{22{,}4}{11{,}2} Q_{O_2}$$

und damit

$$p_{CO} = \frac{\frac{22{,}4}{11{,}2} Q_{O_2}}{\frac{22{,}4}{11{,}2} Q_{O_2} + Q_{IG}} p \;\; = \;\; \frac{\frac{O_{O_2}}{Q_{IG}}}{\frac{Q_{O_2}}{Q_{IG}} + 0{,}5} p$$

wobei das Verhältnis $R = \dfrac{O_{O_2}}{Q_{IG}}$ einem typischen Behandlungsparameter entspricht, in denen der Partialdruck durch das Verhältnis der Sauerstoff - und der Inertgaszufuhr geregelt wird, wobei der so definierter CO-Partialdruck durch die Form beschrieben wird:

$$p_{CO} = \frac{R}{R + 0{,}5} p$$

14. Verfahren nach einem oder mehreren der Ansprüche 1 bis 13, **dadurch gekennzeichnet, dass** die Kinetik der Entkohlungsgeschwindigkeit von zwei charakteristischen Perioden definiert wird, wobei die erste direkt nach den Elementen mit höherer Affinität zu Sauerstoff beginnt und bis zu dem genannten kritischen Punkt annähernd konstant ist, und proportional zu Sauerstoffblasrate, wobei gilt: $\left(-\dfrac{dC}{dt}\right)_H = \dfrac{12}{11,2} Q_{O_2C} \dfrac{1}{W} 100$ wobei

$Q_{O_2C} = \eta Q_{O_2}$ O2-Blasrate der Entkohlung

$\eta$ - Effizienz des geblasenen Gesamt-Sauerstoffs darstellt.

**15.** Verfahren nach Anspruch 14, **dadurch gekennzeichnet, dass** der kritische Punkt in dem Moment bestimmt wird, in dem die Entkohlungsgeschwindigkeit noch den maximalen Wert erhält.

**16.** Verfahren nach einem oder mehreren der Ansprüche 1 bis 15, **dadurch gekennzeichnet, dass** für die weitere formelle Beschreibung des kritischen Punktes für alle drei metallurgischen Gruppen Cr-Mn-Fe gemeinsam eine allgemeine Formel verwendet wird, und zwar:

$$\left(-\frac{dC}{dt}\right) = \frac{1}{\tau_M}\left(C - C^*\right)$$

und

$$C^* = K(X,M,T)p_{CO},$$

wobei M entspricht der Lösungskomponente Cr, Mn bzw. Fe X - weitere Komponenten im flüssigen Metall, wobei gilt:

$$\left(-\frac{dC}{dt}\right) = \frac{1}{\tau_M}\left(C - K(X,M,T)\frac{R}{R+0,5}p\right)$$

und am kritischen Punkt gilt, dass die Kinetik dort mit beiden Gleichungen

$$\left(-\frac{dC}{dt}\right)_H = \frac{12}{11,2}Q_{O_2C}\frac{1}{W}100 \text{ und } \left(-\frac{dC}{dt}\right) = \frac{1}{\tau_M}\left(C - K(X,M,T)\frac{R}{R+0,5}p\right)$$

beschrieben werden und daraus der kritische Punkt analytisch bestimmt wird.

**17.** Verfahren nach Anspruch 16, **dadurch gekennzeichnet, dass** durch den Vergleich beider Entkohlungsgeschwindigkeiten d.h. beider Gleichungen

$$\frac{12}{11,2}Q_{O_2C}\frac{1}{W}100 = \frac{1}{\tau_M}\left(C_{kr} - K(X,M,T)\frac{R}{R+0,5}p\right)$$

der kritische Kohlenstoffgehalt der Schmelze zu

$$C_{kr} = K(X,M,T)\frac{R}{R+0,5}p + \tau_M \frac{12}{11,2}Q_{O_2C}\frac{1}{W}100 \text{ wird,}$$

wobei gilt:

$C_{kr}$ : %

$K(X,M,T)$ : %/bar

$R$ : -

$\tau_M$ : min

$Q_{O_2}$ : Nm3/min

$W$ : kg

$\eta$ : -

**18.** Verfahren nach einem oder mehreren der Ansprüche 1 bis 17, **dadurch gekennzeichnet, dass** die Sauerstoff - Blasprozessdauer wie folgt berechnet wird:

Blasdauer der Hauptperiode

$$\Delta t_H = \frac{C_i - C_{kr}}{\left( -\dfrac{dC}{dt} \right)_H}$$

Blasdauer der Post-Hauptperiode

$$\Delta t_{PH} = \tau_M \ln\left( \frac{C_{kr} - C_f^*}{C_f - C_f^*} \right)$$

$C_f^*$ : C-Gleichgewicht am Prozessende berechnet mit $C^* = K(X,M,T)p_{CO}$,

Blasprozessdauer

$$\Delta t_{gesamt} = \Delta t_H + \Delta t_{PH}$$

Fig.1

Figur 2

EP 3 617 332 A1

**Europäisches Patentamt**
**European Patent Office**
**Office européen des brevets**

# EUROPÄISCHER RECHERCHENBERICHT

Nummer der Anmeldung

EP 19 19 2003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | AT 339 938 B (UNION CARBIDE CORP [US]) 10. November 1977 (1977-11-10) * das ganze Dokument * ----- | 1-18 | INV. C21C7/068 |
| A | Unknown Unknown Unknown: "Steel Melt Processing" In: "Casting", 1. Januar 2008 (2008-01-01), ASM International, XP055635603, ISBN: 978-1-62708-187-0 Seiten 206-229, DOI: 10.31399/asm.hb.v15.a0005199, * das ganze Dokument * ----- | 1-18 | |
| A | EP 2 878 684 A2 (SMS SIEMAG AG [DE]) 3. Juni 2015 (2015-06-03) * das ganze Dokument * ----- | 1-18 | |

**RECHERCHIERTE SACHGEBIETE (IPC)**

C21C

Der vorliegende Recherchenbericht wurde für alle Patentansprüche erstellt

| Recherchenort | Abschlußdatum der Recherche | Prüfer |
|---|---|---|
| Den Haag | 24. Januar 2020 | Desvignes, Rémi |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 19 2003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2020

| Im Recherchenbericht angeführtes Patentdokument | Datum der Veröffentlichung | Mitglied(er) der Patentfamilie | Datum der Veröffentlichung |
|---|---|---|---|
| AT  339938     B | 10-11-1977 | AT       339938 B<br>AU      4833272 A<br>CA       975565 A<br>DE      2253480 A1<br>ES       408142 A1<br>FR      2161942 A1<br>IT       966875 B<br>JP      S4852603 A<br>JP      S5226212 B2<br>SE       413780 B<br>US      3816720 A | 10-11-1977<br>02-05-1974<br>07-10-1975<br>03-05-1973<br>01-02-1976<br>13-07-1973<br>20-02-1974<br>24-07-1973<br>13-07-1977<br>23-06-1980<br>11-06-1974 |
| EP  2878684    A2 | 03-06-2015 | DE 102014201827 A1<br>EP      2878684 A2 | 28-05-2015<br>03-06-2015 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 19540490 C1